# EUROPÄISCHE PATENTANMELDUNG

(11) **EP 1 244 336 A2**
(43) Veröffentlichungstag der Anmeldung: **25.09.2002**
(21) Anmeldenummer: 02003514.3
(22) Anmeldetag: 15.02.2002
(51) Int. Cl.: H05B 39/04

(54) **Dimmer**

(30) Priorität: 21.03.2001 DE 10113690
(71) Anmelder: Eltako GmbH Schaltgeräte, 70736 Fellbach (DE)
(72) Erfinder: Ziegler, Ulrich, 70734 Fellbach (DE)
(74) Vertreter: Hoeger, Stellrecht & Partner

(57) **Zusammenfassung**

Die Erfindung betrifft einen Dimmer mit einem Einstellglied zum Einstellen eines gewünschten Dimmungsgrades, einer Phasenanschnittund einer Phasenabschnittsteuerung und mit einer Lasterkennungsschaltung zum selbsttätigen Aktivieren der Phasenanschnitt- oder Phasenabschnittsteuerung. Um den Dimmer derart weiterzubilden, daß auch bei hohen kapazitiven und/oder ohmschen Lasten die jeweils geeignete Steuerungsart aktiviert werden kann, wird erfindungsgemäß vorgeschlagen, daß die Last-erkennungsschaltung überbrückbar und die Phasenanschnittsteuerung oder die Phasenabschnittsteuerung manuell aktivierbar sind.

## Beschreibung

Die Erfindung betrifft einen Dimmer mit einem Einstellglied zum Einstellen eines gewünschten Dimmungsgrades, einer Phasenanschnittünd einer Phasenabschnittsteuerung und mit einer Lasterkennungsschaltung zum selbsttätigen Aktivieren der Phasenanschnitt- oder Phasenabschnittsteuerung.

Derartige Dimmer ermöglichen eine Regulierung einer an sie angeschlossenen elektrischen Last. Sie ermöglichen insbesondere, den Helligkeitsgrad von Glühlampen, Hoch- und Niedervolt-Halogenlampen mit elektronischen oder konventionellen Transformatoren einzustellen. Die Regulierung der angeschlossenen Last erfolgt alternativ entweder mittels einer Phasenanschnittsteuerung oder Phasenabschnittsteuerung. Die Phasenanschnittsteuerung kommt bei Vorliegen einer induktiven Last, beispielsweise eines konventionellen Transformators, zum Einsatz. Üblicherweise wird hierzu ein Triac verwendet, der über eine Trigger-Diode angesteuert wird. Der Mittelwert einer Ausgangsspannung des Dimmers wird entsprechend einem vorgegebenen Phasenanschnittwinkel reduziert oder erhöht, so daß die vom Dimmer ausgegebene elektrische Leistung entsprechend reguliert werden kann. Die Phasenabschnittsteuerung kommt bei Vorliegen einer kapazitiven Last zum Einsatz, wie sie insbesondere bei einem elektronischen Transformator in Form eines Schaltnetzteiles gegeben ist, und verwendet üblicherweise einen Hochleistungs-Schalttransistor.

Mittels der Lasterkennungsschaltung kann die Art der an den Dimmer angeschlossenen elektrischen Last (kapazitiv oder induktiv) erkannt und entweder die Phasenanschnittsteuerung oder die Phasenabschnittsteuerung zur Regulierung der Last aktiviert werden. Dies ermöglicht eine selbsttätige Anpassung des Dimmers, und die an den Dimmer angeschlossene Last kann jederzeit verändert werden.

Die selbsttätige Anpassung des Dimmers an die jeweils angeschlossene Last hat sich in vielen Fällen bewährt. Bei hohen Leitungskapazitäten und bei hohen ohmschen Lasten wird allerdings bei bekannten Lasterkennungsschaltungen nicht in allen Fällen jeweils die geeignete Steuerungsart aktiviert.

Aufgabe der vorliegenden Erfindung ist es, einen Dimmer der eingangs genannten Art derart weiterzubilden, daß auch bei Vorliegen hoher Leitungskapazitäten oder hoher ohmscher Lasten zuverlässig die jeweils geeignete Steuerungsart aktiviert werden kann.

Diese Aufgabe wird bei einem Dimmer der gattungsgemäßen Art erfindungsgemäß dadurch gelöst, daß die Lasterkennungsschaltung überbrückbar und die Phasenanschnittsteuerung oder die Phasenabschnittsteuerung manuell aktivierbar sind. Der erfindungsgemäße Dimmer ermöglicht eine selbsttätige Anpassung der Steuerungsart an die jeweils an den Dimmer angeschlossene Last mittels der Lasterkennungsschaltung, die Lasterkennungsschaltung kann jedoch auch überbrückt und die Phasenanschnittsteuerung oder die Phasenabschnittsteuerung können manuell aktiviert werden. Eine derartige manuelle Aktivierung kann insbesondere dann vorgenommen werden, wenn mittels des Dimmers hohe ohmsche und/oder kapazitive Lasten reguliert werden sollen, wie sie beispielsweise bei Vorliegen hoher Leitungskapazitäten auftreten können. So kann beispielsweise bei der Installation des Dimmers zunächst die automatische Anpassung mittels der Lasterkennungsschaltung gewählt werden. Sollten hierbei Probleme auftreten, so kann die Lasterkennungsschaltung überbrückt und die geeignete Steuerungsart manuell aktiviert werden.

Von Vorteil ist es, wenn der Dimmer einen Wahlschalter umfaßt zur wahlweisen Aktivierung entweder der Lasterkennungsschaltung oder der Phasenanschnittsteuerung. Eine derartige Ausführungsform ermöglicht alternativ zur Lasterkennungsschaltung den gezielten Einsatz einer Phasenanschnittsteuerung.

Alternativ und/oder ergänzend kann vorgesehen sein, daß der Dimmer einen Wahlschalter umfaßt zur wahlweisen Aktivierung entweder der Lasterkennungsschaltung oder der Phasenabschnittsteuerung.

Bei einer bevorzugten Ausführungsform ist vorgesehen, daß der Dimmer einen Wahlschalter mit drei Schaltstellungen umfaßt zur wahlweisen Aktivierung entweder der Lasterkennungsschaltung, der Phasenanschnittsteuerung oder der Phasenabschnittsteuerung. Dies gibt die Möglichkeit, mittels eines einzigen Schalters die jeweils gewünschte Steuerungsart entweder manuell einzustellen oder aber die automatische Anpassung des Dimmers zu wählen.

Bei einer vorteilhaften Ausführungsform ist vorgesehen, daß dem Einstellglied des Dimmers eine Erkennungslogik für den eingestellten Dimmungsgrad nachgeordnet ist, wobei die Erkennungslogik über den Wahlschalter wahlweise mit der Lasterkennungsschaltung, der Phasenanschnittsteuerung oder der Phasenabschnittsteuerung verbindbar ist. Über den Wahlschalter kann somit wahlweise der Lasterkennungsschaltung oder einer der Steuerungsschaltungen das Ausgangssignal der Erkennungslogik zugeführt werden.

Der Wahlschalter kann beispielsweise als Drehschalter ausgebildet sein. Alternativ kann eine Steckbrücke oder eine Lötbrücke zum Einsatz kommen.

Von besonderem Vorteil ist es, wenn der Lastausgang des Dimmers mittels zumindest eines externen Steuersignals zentral steuerbar ist. Dadurch kann der Dimmer beispielsweise in eine Gebäudesystemtechnik integriert werden. Mittels externer Steuersignale kann zum Beispiel die vom Dimmer bereitgestellte Ausgangsleistung ausgeschaltet oder auf einen Maximalwert eingestellt werden, oder es kann der entsprechend der Stellung des Einstellgliedes gewünschte Dimmungsgrad gewählt werden.

Vorzugsweise weist der Dimmer eine an die Phasenanschnittsteuerung und die Phasenabschnittsteuerung angeschlossene Leistungsschalteinheit auf, die mindestens einen zentralen Steuereingang umfaßt, beispielsweise zum Anschluß eines externen EIN- und/oder AUS-Signales. Dadurch kann die Leistungsschalteinheit zentral beispielsweise ausgeschaltet werden unabhängig von den Steuersignalen der Phasenanschnittsteuerung und der Phasenabschnittsteuerung.

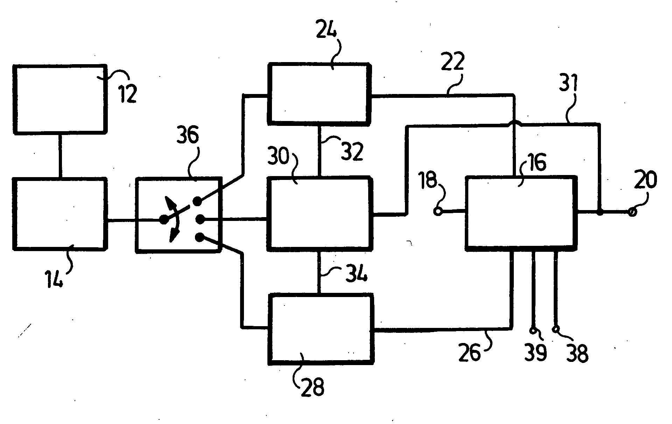

Die nachfolgende Beschreibung einer bevorzugten Ausführungsform der Erfindung dient im Zusammenhang mit der Zeichnung der näheren Erläuterung.

In der einzigen Figur ist ein Blockschaltbild eines insgesamt mit dem Bezugszeichen 10 belegten Dimmers dargestellt mit einem Einstellglied 12 für den gewünschten Dimmungsgrad, das an eine Erkennungslogik 14 für den Dimmungsgrad angeschlossen ist.

Der Dimmer 10 umfaßt außerdem eine Leistungsschalteinheit 16, an deren Eingang 18 eine Netzspannung anschließbar ist und deren Ausgang 20 der Lastausgang des Dimmers 10 darstellt. An den Lastausgang 20 kann eine elektrische Last, beispielsweise eine Lampe, deren Helligkeit reguliert werden soll, angeschlossen werden, wobei die vom Dimmer 10 bereitgestellte elektrische Leistung entsprechend der Stellung des Einstellgliedes 12 reguliert werden kann.

Die Leistungsschalteinheit 16 steht über eine erste Steuerleitung 22 mit einer Phasenanschnittsteuerung 24 in Verbindung, und über eine zweite Steuerleitung 26 ist an die Leistungsschalteinheit 16 eine Phasenabschnittsteuerung 28 angeschlossen.

Der Dimmer 10 weist darüber hinaus eine Lasterkennungsschaltung 30 auf, die über eine Prüfleitung 31 mit dem Lastausgang 20 in Verbindung steht. Über erste und zweite Signalleitungen 32 bzw. 34 ist die Lasterkennungsschaltung 30 an die Phasenanschnittsteuerung 24 und die Phasenabschnittsteuerung 28 angeschlossen. Beim Anlegen einer Netzspannung an den Eingang 18 der Leis-tungsschalteinheit 16 und erstmaligem Einschalten des Dimmers 10 prüft die Lasterkennungsschaltung 30 die Art der angeschlossenen Last. Je nach dem, ob es sich um eine induktive oder um eine kapazitive Last handelt, wird über die Signalleitung 32 bzw. 34 ein Aktivierungssignal an die Phasenanschnittsteuerung 24 oder an die Phasenabschnittsteuerung 28 ausgegeben.

Die Phasenanschnittsteuerung 24, die Lasterkennungsschaltung 30 und die Phasenabschnittsteuerung 28 stehen über einen manuell betätigbaren Wahlschalter 36 mit der Erkennungslogik 14 in Verbindung. Der Wahlschalter 36 weist drei Schaltstellungen auf, die der Phasenanschnittsteuerung 24, der Lasterkennungsschaltung 30 bzw. der Phasenabschnittsteuerung 28 zugeordnet sind. Befindet sich der Wahlschalter 36 in seiner mittleren Schaltstellung, so wird von der Erkennungslogik 14 ein Steuersignal an die Lasterkennungsschaltung übergeben, die daraufhin in Abhängigkeit von der Art der am Lastausgang 20 anliegenden elektrischen Last entweder die Phasenanschnittsteuerung 24 oder die Phasenabschnittsteuerung 28 aktiviert. Alternativ zur Lasterkennungsschaltung kann mittels des Wahlschalters 36 jedoch auch direkt die Phasenanschnittsteuerung 24 oder die Phasenabschnittsteuerung 28 aktiviert werden, wobei dann die Lasterkennungsschaltung 30 überbrückt wird. Dies ermöglicht eine manuelle Einstellung der jeweils gewünschten Steuerungsart unabhängig vom Resultat der Prüfung der Lasterkennungsschaltung.

Der Leistungsschalteinheit 16 weist außerdem zwei zentrale Steuereingänge 38 und 39 auf, an die jeweils ein externes Steuersignal angeschlossen werden kann. Über den zentralen Steuereingang 38 kann ein zentrales EIN-Signal der Leistungschalteinheit 16 eingegeben werden, so das diese unabhängig von der gewählten Stellung des Einstellgliedes 12 eine maximale Ausgangsleistung bereitstellt. Alternativ und/oder ergänzend kann vorgesehen sein, daß die Leistungsschalteinheit 16 über den Steuereingang 38 zentral angesteuert werden kann zur Bereitstellung einer Ausgangsleistung entsprechend dem vorher gewählten Dimmungsgrad. Über den zentralen Steuereingang 39 kann der Leistungsschalteinheit ein zentrales AUS-Signal eingegeben werden, so daß keinerlei Ausgangsleistung ausgegeben wird.

## Patentansprüche

1. Dimmer mit einem Einstellglied zum Einstellen eines gewünschten Dimmungsgrades, einer Phasenanschnitt- und einer Phasenabschnittsteuerung und mit einer Lasterkennungsschaltung zum selbsttätigen Aktivieren der Phasenanschnitt- oder Phasenabschnittsteuerung, **dadurch gekennzeichnet, daß** die Lasterkennungsschaltung (30) überbrückbar und die Phasenanschnittsteuerung (24) oder die Phasenabschnittsteuerung (28) manuell aktivierbar sind.

2. Dimmer nach Anspruch 1, **dadurch gekennzeichnet, daß** der Dimmer (10) einen Wahlschalter (36) umfaßt zur wahlweisen Aktivierung entweder der Lasterkennungsschaltung (30) oder der Phasenanschnittsteuerung (24).

3. Dimmer nach Anspruch 1 oder 2, **dadurch gekennzeichnet, daß** der Dimmer (10) einen Wahlschalter (36) umfaßt zur wahlweisen Aktivierung entweder der Lasterkennungsschaltung (30) oder der Phasenabschnittsteuerung (28).

4. Dimmer nach Anspruch 1, 2 oder 3, **dadurch gekennzeichnet, daß** der Dimmer einen Wahlschalter (36) mit drei Schaltstellungen umfaßt zur wahlweisen Aktivierung der Lasterkennungsschaltung (30), der Phasenanschnittsteuerung (24) oder der Phasenabschnittsteuerung (28).

5. Dimmer nach einem der Ansprüche 2, 3 oder 4, **dadurch gekennzeichnet, daß** dem Einstellglied (12) eine Erkennungslogik (14) für den eingestellten Dimmungsgrad nachgeordnet ist, wobei die Erkennungslogik (14) über den Wahlschalter (36) wahlweise mit der Lasterkennungsschaltung (30) oder der Phasenanschnitt- oder Phasenabschnittsteuerung (24, 28) verbindbar ist.

6. Dimmer nach einem der Ansprüche 2 bis 5, **dadurch gekennzeichnet, daß** der Wahlschalter (36) als Drehschalter ausgebildet ist.

7. Dimmer nach einem der Ansprüche 2 bis 5, **dadurch gekennzeichnet, daß** der Wahlschalter als Steckbrücke ausgebildet ist.

8. Dimmer nach einem der Ansprüche 2 bis 5, **dadurch gekennzeichnet, daß** der Wahlschalter als Lötbrücke ausgestaltet ist.

9. Dimmer nach einem der voranstehenden Ansprüche, **dadurch gekennzeichnet, daß** der Lastausgang (20) des Dimmers (10) mittels zumindest eines externen Steuersignals zentral steuerbar ist.

10. Dimmer nach Anspruch 9, **dadurch gekennzeichnet, daß** der Dimmer (10) ein an die Phasenanschnittsteuerung (24) und die Phasenabschnittsteuerung (28) angeschlossene Leistungsschalteinheit (16) aufweist, die zumindest einen Steuereingang (38) umfaßt für ein externes Steuersignal.
